# EUROPEAN PATENT APPLICATION

(11) **EP 4 473 832 A1**
(43) Date of publication of application: **11.12.2024**
(21) Application number: 24180233.9
(22) Date of filing: 05.06.2024
(51) Int. Cl.: A01M 7/00

(54) **APPARATUS AND METHOD FOR SPRAYING**

(30) Priority: 07.06.2023 IT 202300011631
(71) Applicant: Martignani Ing. C. Di Martignani Stefano & C. S.r.l., 48020 Sant'Agata Sul Santerno (RA) (IT)
(72) Inventor: MARTIGNANI, Stefano, 48022 LUGO (RAVENNA) (IT)
(74) Representative: Scipioni, Luca

(57) **Abstract**

An apparatus (1) for spraying crops with a treating compound, comprises: a tank (2), configured to contain the treating compound; a dispensing assembly (3), configured to receive treating air, including the treating compound in nebulized form; a pressure head assembly (4), configured to take air in from an outside atmosphere, mix it with the treating compound and pump it to the dispensing assembly (3); a frame (5) configured to support the tank (2), the dispensing assembly (3) and the pressure head assembly (4); a charging assembly, configured to electrostatically charge the treating compound in nebulized form before dispensing it. Wherein the apparatus (1) comprises a conveyor which includes: an inlet port (41), connected to the pressure head assembly (4) to receive treating air; a first outlet port and a second outlet port (42, 43), connected to the dispensing assembly (3) to convey therein the treating air received from the pressure head assembly (4) and including a respective flow section which is perpendicular to the advancing direction (DA) of the apparatus (1).

## Description

This invention relates to an apparatus and a method for spraying crops.

In the trade related to apparatuses of this kind, prior art spraying systems of different kinds are known, each dedicated to a certain type of crop, and also adapted to crop height and to land features and shape.

Prior art apparatuses, however, are not very flexible because each one has to be adapted with production codes and dedicated components, involving high costs and lengthy production times. Moreover, once the machine has been configured for a specific application, changing its configuration is very invasive and means changing a large number of components, often not possible on location.

Known in the prior art are spraying apparatuses of different kinds which have attempted to at least partly solve the problem of flexibility but without overcoming some serious disadvantages. Such apparatuses are described, for example, in documents EP3981248A1, EP3087835A1 and IT202100025151A1, in the name of the present Applicant. Document WO8801539A1 also appears to describe a solution which has the same disadvantages as the others of the prior art.

The aim of this invention is to provide a crop spraying apparatus and method to overcome the above mentioned disadvantages of the prior art.

This aim is fully achieved by the apparatus and method of this disclosure as characterized in the appended claims.

According to one aspect of it, this disclosure provides an apparatus for spraying crops with a treating compound.

The apparatus comprises a tank, configured to contain the treating compound.

The apparatus comprises a dispensing assembly, configured to receive treating air, including the treating compound in nebulized form.

The apparatus comprises a pressure head assembly, configured to take air in from an outside atmosphere, mix it with the treating compound and pump it to the dispenser.

The apparatus comprises a frame, configured to support the tank, the dispenser and the pressure head assembly.

The apparatus comprises a charging assembly, configured to electrostatically charge the treating compound in nebulized form before dispensing it.

The tank is disposed upstream of the pressure head assembly along an advancing direction of the apparatus in an advancing sense.

The apparatus comprises a conveyor.

The conveyor includes an inlet port, connected to the pressure head assembly to receive treating air.

The conveyor includes a first outlet port. The conveyor includes a second outlet port. The first and/or the second outlet port are connected to the dispensing assembly to convey therein the treating air received from the pressure head assembly.

The first and second outlet ports include a respective flow section which is perpendicular to the advancing direction of the apparatus.

The presence of a conveyor of this kind allows creating the conditions necessary to fit the conveyor with different kinds of dispensing assemblies, adaptable to different requirements. In effect, this conveyor allows access to both of the dispensing sides of the apparatus.

The dispenser comprises a first and a second dispensing column, respectively connected to the first and the second outlet port. The apparatus comprises a respective first connecting system, interposed between the first dispensing column and the first outlet port. The apparatus comprises a second connecting system, interposed between the second dispensing column and the second outlet port.

It is noted that the dispensing column extends mainly along a vertical direction, substantially perpendicular to the ground. The first and second dispensing columns preferably comprise lateral openings to receive corresponding dispensing assemblies. In an embodiment, the first and second columns are closed at the top. Thus, the first and second columns are not themselves dispensers but means of extending the path of the nebulized treating air towards one or more dispensers connected to them. The apparatus comprises a dispensing module. The dispensing module includes a manifold which is elongated along a longitudinal direction. The dispensing module includes a plurality of dispensing mouths, spaced from each other along the longitudinal direction and oriented along a dispensing direction, inclined to the longitudinal direction. The dispensing module comprises a first connecting profile, at a first longitudinal end, and a second connecting profile, at a second longitudinal end.

That way, the first connecting profile of the module can be connected to the first or the second outlet port, while the second connecting profile of the module can be connected to the first connecting module of an additional dispensing module, to make up the dispensing column at will (according to requirements).

The first and second dispensing columns are defined by one dispensing module or by a plurality of dispensing modules placed one above the other along the longitudinal direction.

The first and the second dispensing columns have a respective dispensing position, adjustable by relative rotation about a longitudinal axis between the first and the second dispensing column and the respective first and second outlet port, respectively. The first and/or the second connecting system is provided for this purpose.

In particular, the first or the second connecting system comprises:
- a connecting hole made in the first or the second outlet port;
- a circumferential slot, made on the first or the second dispensing column;
- a connecting element, inserted in the connecting hole and in the circumferential slot and movable between a tightened position, where the first or the second outlet port is constrained in rotation to the first or the second dispensing column, and a loose position, where the first or the second dispensing column rotates about the respective longitudinal axis relative to the first or the second outlet port.

In an embodiment which is better performing, the first or the second connecting system comprises a hydraulic jack movable along an adjustment direction. The movement of the hydraulic jack causes relative rotation between the first or the second outlet port and the first or the second dispensing column, respectively. In use, the jack is locked so as to constrain the first or the second outlet port in rotation with the first or the second dispensing column.

In this case, the control may be effected by entering input data in an interface which communicates with a control unit which sends command signals to the jack to instruct it to adjust the relative position between the first or the second outlet port and the first or the second dispensing column. In a preferred embodiment, the conveyor comprises a first opening and a second opening, configured to receive the treating air from the inlet port of the conveyor. Further, the conveyor comprises a first curve having a respective inlet section connected to the first opening and a respective outlet section defining the first outlet port. The conveyor comprises a second curve having a respective inlet section connected to the second opening and a respective outlet section defining the second outlet port.

The first curve is connected to the first opening adjustably relative to a rotation about an axis parallel to the advancing direction of the apparatus. The second curve is connected to the second opening adjustably relative to a rotation about an axis parallel to the advancing direction of the apparatus. The first and second openings face a direction parallel to the advancing direction.

In an embodiment providing further operational flexibility, the conveyor comprises a third outlet port, facing a direction perpendicular to the advancing direction in a sense opposite of the sense of the weight force. The conveyor is circular in shape and the third outlet port is on a side opposite the side where the first and second openings are. The first and second openings are juxtaposed along a transverse direction, perpendicular to the advancing direction and to the longitudinal direction.

The apparatus comprises a dispensing assembly, extending from the third outlet port along the longitudinal direction. The dispensing assembly comprises a first and a second dispensing fan, configured to dispense the treating air towards the sides of the apparatus.

The pressure head assembly comprises a fan configured to rotate about an axis parallel to the advancing direction.

According to one aspect of it, this disclosure provides a method for spraying crops with a treating compound.

The method comprises a step of providing a spraying apparatus advancing among the crops along an advancing direction.

The method comprises a step of storing a treating compound in a tank.

The method comprises a step of receiving treating air, including the treating compound in nebulized form, in a dispensing assembly.

The method comprises a step of taking air in from an outside atmosphere and mixing the air with the treating compound.

The method comprises a step of pumping the treating air into the dispensing assembly by means of a pressure head assembly.

The method comprises a step of electrostatically charging the treating compound in nebulized form before dispensing it.

In the step of pumping the treating air into the dispensing assembly, the treating air flows through the conveyor which is described above and which includes one or more of the features described above.

This and other features will become more apparent from the following description of a preferred embodiment, illustrated by way of non-limiting example in the accompanying drawings, in which:

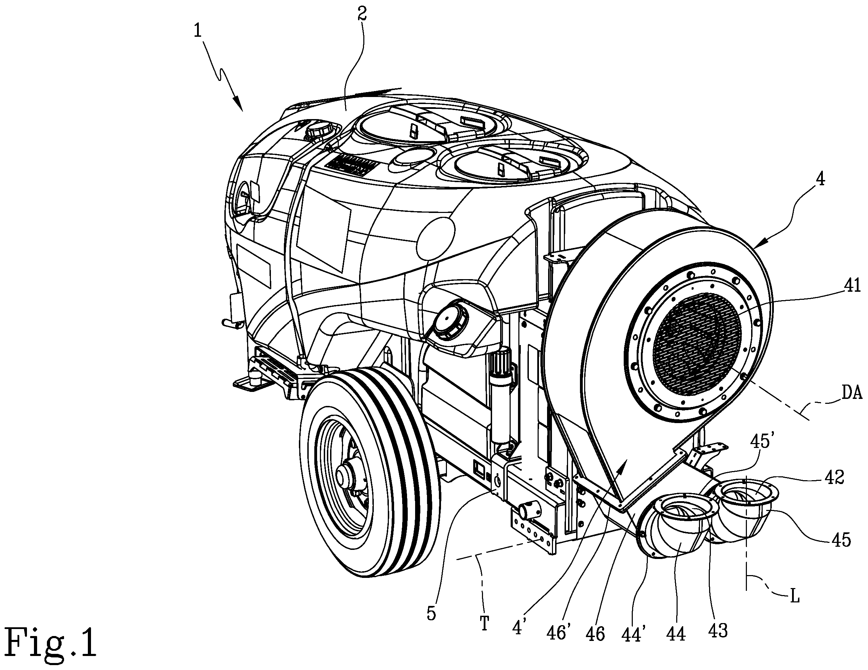

- Figure 1 shows a perspective view of an embodiment of a crop spraying apparatus according to this disclosure;

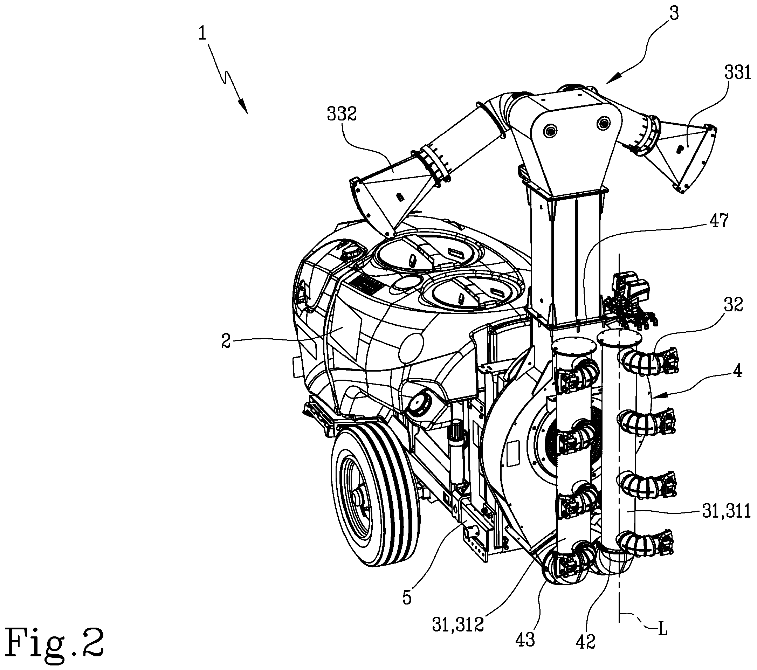

- Figure 2 shows a perspective view of another embodiment of a crop spraying apparatus according to this disclosure;

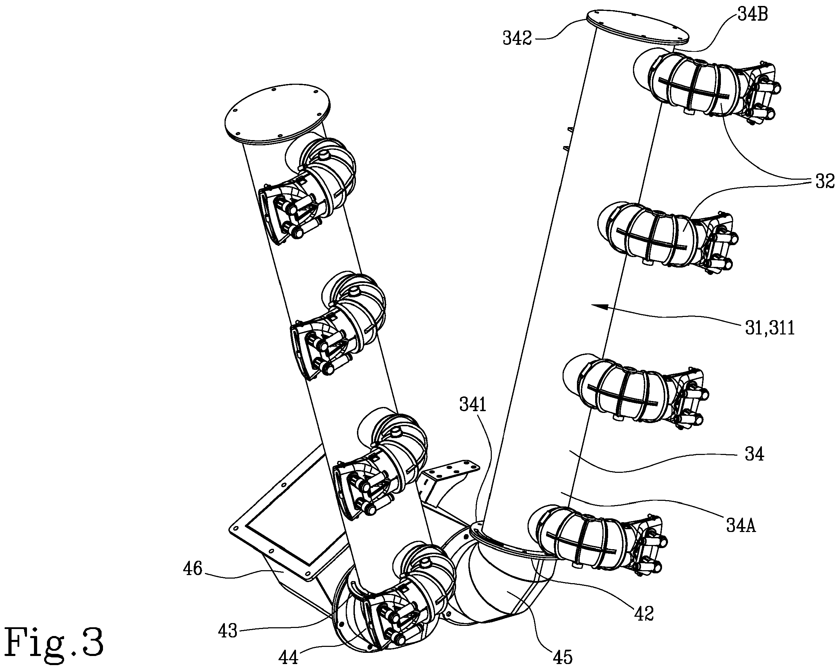

- Figure 3 shows a perspective view of a dispensing assembly of the apparatus of Figure 2;

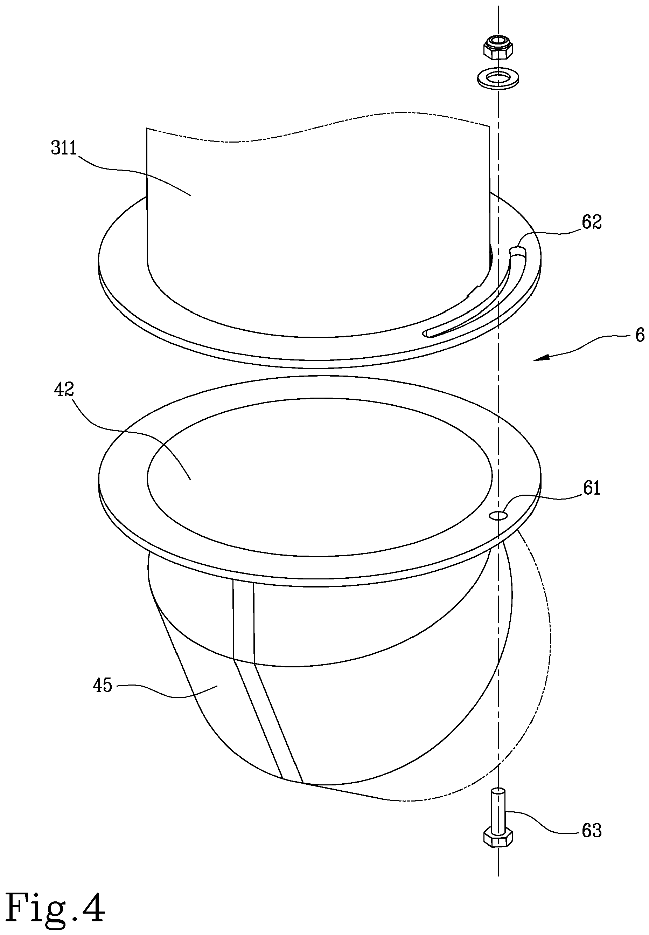

- Figure 4 shows a schematic view of a connecting system between a dispensing column and a curve of a conveyor of the apparatus of Figure 2.

With reference to the accompanying drawings, the numeral 1 denotes an apparatus for spraying crops with a treating compound, nebulized in air, to define treating air to be applied on the crops.

The apparatus 1 comprises a tank 2, configured to contain the treating compound.

The apparatus 1 comprises a dispensing assembly 3, configured to receive treating air, including the treating compound in nebulized form.

The apparatus comprises a pressure head assembly 4, configured to take air in from an outside atmosphere, mix it with the treating compound and pump it to the dispensing assembly 3.

The apparatus 1 comprises a frame 5 configured to support the tank 2, the dispensing assembly 3 and the pressure head assembly 4.

The apparatus comprises a charging assembly, configured to electrostatically charge the treating compound in nebulized form before dispensing it.

The tank 2 is located upstream of the pressure head assembly 4 relative to an advancing direction DA of the apparatus in an advancing sense.

The apparatus 1 comprises a conveyor.

The conveyor comprises an inlet port 41. The inlet port 41 faces a fan of the pressure head assembly 4 to receive treating air from the pressure head assembly 4 (in order to convey it towards the dispensing assembly 3). The fan rotates about an axis parallel to the advancing direction DA. Thus, the inlet port 41 has a flow section which is preferably perpendicular to the advancing direction DA.

The conveyor comprises a main body 4'. The main body 4' has a circular shape or a spiral shape. The main body 4' has a circumferential opening 46'. The circumferential opening 46' receives the flow of treating air. The circumferential opening 46' has a section which is perpendicular to a direction which is tangential to the circular shape of the main body 4'. Thus, the flow of treating air is diverted from a direction perpendicular to the advancing direction DA to a tangential direction. The circumferential opening 46' orients the flow of treating air in a direction which has at least one component directed towards the ground.

The conveyor comprises a conveying tunnel 46. The conveying tunnel 46 is connected to the circumferential opening 46' of the main body 4' to receive treating air therefrom. The conveying tunnel 46 comprises a first opening 44' and a second opening 45'. The first and second openings 44', 45' are juxtaposed along a transverse direction T, perpendicular to the advancing direction DA and to the direction which is parallel to the weight force. The first and second openings 44', 45' comprise respective flow sections which are parallel to the advancing direction DA. Preferably, the first and second openings 44', 45' are equal in cross section area so that the flow rate through the two openings is the same.

The conveyor comprises a first curve 44 and a second curve 45. The first and second curves 44, 45 are connected to the first and second openings 44', 45' of the conveying tunnel 46.

The first and second curves 44, 45 are configured to divert the flow of treating air from a direction which is parallel to the advancing direction DA to a direction which is perpendicular to the advancing direction DA. Preferably, the first and second curves 44, 45 are configured to divert the flow of treating air from a direction which is parallel to the advancing direction DA to a direction which has at least one component in a longitudinal direction L, perpendicular to the transverse direction T and to the advancing direction DA.

The first and second curves 44, 45 comprise respective openings which define a first and second outlet port 42, 43 of the conveyor. The first and second outlet ports have respective outlet sections which are perpendicular to the longitudinal direction or which are perpendicular to a direction which has at least one component along the longitudinal direction L.

It should be noted that the position of the first and the second curve 44, 45 relative to the first and the second opening 44', 45 is adjustable. Specifically, the first and second curves 44, 45 are rotatable relative to the first and second openings 44', 45' about an axis which is parallel to the advancing direction DA to adjust the angular position. This causes a variation in the orientation of the first and second outlet ports 42, 43, which defines a further adjustment of the apparatus 1.

This adjustment is made possible by a respective connecting system between the first and the second curve 44, 45 and the first and the second opening 44', 45' of the conveying tunnel 46, described in detail below.

In an embodiment, the main body 4' comprises a third outlet port 47. The third outlet port 47 receives the flow of treating air. The third outlet port 47 has a section which is perpendicular to a direction which is tangential to the circular shape of the main body 4'. Thus, the flow of treating air is diverted from a direction perpendicular to the advancing direction DA to a tangential direction. The third outlet port 47 orients the flow of treating air in a direction which has at least one component directed in a sense which is the opposite of the sense in which the flow directed towards the circumferential opening 46' is oriented (that is to say, upwards).

The dispensing assembly 3 comprises a dispensing module 31. The dispensing module 31 comprises a manifold 34, that is, a tube elongated along the longitudinal direction L, and a plurality of dispensing mouths 32. The dispensing module 31 has a first connecting profile 341, at a first longitudinal end 34A, and a second connecting profile 342, at a second longitudinal end 34B.

The plurality of dispensing mouths 32 is oriented in such a way as to deliver treating air in a direction having at least one component along the transverse direction T.

The first connecting profile 341 is connectable to the first or the second outlet port 42, 43 or connectable to a second connecting profile 342 of a dispensing module 31 under it to form a dispensing column. The second connecting profile 342 of the dispensing module 31, on the other hand, is reclosable with a cap, if it is sufficient or connectable to a first connecting profile of a dispensing module positionable above it to extend the dispensing column upwards.

Having said that, the apparatus 1 comprises a first and a second dispensing column 311, 312, connected to the first and the second outlet port 42, 43, respectively.

It should be noted that the position of the first and the second curve 311, 312 relative to the first and the second opening 42', 43 is adjustable. Specifically, the first and second dispensing columns 311, 312 are rotatable relative to the first and second outlet ports 42, 43 about a respective axis which is parallel to the longitudinal direction L to adjust the angular position of the dispensing columns 311, 312. This causes a variation in the orientation of the dispensing direction of the plurality of dispensing mouths 32 which can be oriented at an angle forwards or backwards relative to the advancing direction of the vehicle.

This adjustment is made possible by a respective connecting system between the first and the second dispensing column 311, 312 and the first and the second outlet port 42, 43, described in detail below.

Therefore, it is specified that with the connecting system interposed between:
(a) the first and the second opening 44', 45' and the first and the second curve 44, 45 and between
(b) the first and the second dispensing column 311, 312 and the first and the second outlet port 42, 43,
the dispensing direction of the plurality of dispensing mouths can be adjusted:
(a) to dispense in a direction towards the ground or in the opposite direction;
(b) to dispense in a direction forward or backwards relative to the advancing direction DA in the advancing sense.

The dispensing assembly 3 also extends from the third outlet port 47 along the longitudinal direction L. The dispensing assembly 3 comprises a first and a second dispensing fan 331, 332, configured to dispense the treating air towards the sides of the apparatus 1. The first and second dispensing fans 331, 332 are connected (for example, by an elevating duct) to the third outlet port 47. The first and second dispensing fans 331, 332 are disposed upstream of the first and second dispensing column 311, 312 along the advancing direction DA in the advancing sense.

The apparatus 1 comprises an elevating duct, disposed between the third outlet port 47 and the first and second dispensing fans 331, 332 to allow dispensing the treating compound from the top down.

The first and second dispensing fans 331, 332 include a respective position which is adjustable relative to a rotation about an axis parallel to the advancing direction DA. More in detail, there are adjustable connections (or hinges) which allow relative rotation between the first and the second dispensing fan 331, 332 and the elevating duct.

Whatever the case, the position of the first and second dispensing fans 331, 332 is such as to allow dispensing the treating compound along a direction which is at least partly oriented towards the ground.

In an embodiment, the connecting system 6 comprises:
- a connecting hole 61 made in (a flange of) the first or the second outlet port 42, 43;
- a circumferential slot 62, made on (a flange of) the first or the second dispensing column 311, 312;
- a connecting element 63, inserted in the connecting hole 61 and in the circumferential slot 62 and movable between a tightened position, where the first or the second outlet port 42, 43 is constrained in rotation to the first or the second dispensing column 311, 312, and a loose position, where the first or the second dispensing column 311, 312 rotates about the respective longitudinal axis relative to the first or the second outlet port 42, 43.

## Claims

1. An apparatus (1) for spraying crops with a treating compound, comprising:
- a tank (2), configured to contain the treating compound;
- a dispensing assembly (3), configured to receive treating air, including the treating compound in nebulized form;
- a pressure head assembly (4), configured to take air in from an outside atmosphere, mix it with the treating compound and pump it to the dispensing assembly (3);
- a frame (5) configured to support the tank (2), the dispensing assembly (3) and the pressure head assembly (4),
- a charging assembly, configured to electrostatically charge the treating compound in nebulized form before dispensing it,
wherein the tank is disposed upstream of the pressure head assembly (4) relative to an advancing direction (DA) of the apparatus (1) in an advancing sense,
wherein the apparatus (1) comprises a conveyor including:
- an inlet port (41), connected to the pressure head assembly (4) to receive treating air;
- a first outlet port and a second outlet port (42, 43), connected to the dispensing assembly (3) to convey therein the treating air received from the pressure head assembly (4),
wherein the first and the second outlet port (42, 43) include a respective flow section perpendicular to the advancing direction (DA) of the apparatus (1).

2. The apparatus (1) according to claim 1, wherein the dispensing assembly (3) comprises a first and a second dispensing column (311, 312), respectively connected to the first and the second outlet port (42, 43), wherein the apparatus comprises a respective first connecting system (6), interposed between the first dispensing column (311) and the first outlet port (42), and second connecting system (6), interposed between the second dispensing column (312) and the second outlet port (43).

3. The apparatus (1) according to claim 2 comprising a dispensing module (31) which includes a manifold (34) elongated along a longitudinal direction (L).

4. The apparatus (1) according to claim 3 wherein the dispensing module (31) comprises a plurality of dispensing mouths (32), spaced from each other along the longitudinal direction (L) and oriented along a dispensing direction, inclined to the longitudinal direction (L), and wherein the first and the second dispensing columns (311, 312) are defined by one dispensing module (31) or by a plurality of dispensing modules (31) placed one above the other along the longitudinal direction (L).

5. The apparatus (1) according to claim 2 or 3, wherein the first and the second dispensing column (311, 312) have a respective dispensing position, adjustable by relative rotation about a longitudinal axis between the first and the second dispensing column (311, 312) and the respective first and second outlet port (42, 43), respectively.

6. The apparatus (1) according to claim 5, wherein the first or the second connecting system comprises:
- a connecting hole (61) made in the first or the second outlet port (42, 43);
- a circumferential slot (62), made on the first or the second dispensing column (311, 312);
- a connecting element (63), inserted in the connecting hole (61) and in the circumferential slot (62) and movable between a tightened position, where the first or the second outlet port (42, 43) is constrained in rotation to the first or the second dispensing column (311, 312), and a loose position, where the first or the second dispensing column (311, 312) rotates about the respective longitudinal axis relative to the first or the second outlet port (42, 43).

7. The apparatus (1) according to any one of the preceding claims, wherein the conveyor comprises:
- a first opening and a second opening (44', 45'), configured to receive the treating air from the inlet port of the conveyor;
- a first curve (44), having a respective inlet section connected to the first opening (44') and a respective outlet section defining the first outlet port (42), and a second curve (45), having a respective inlet section connected to the second opening (45') and a respective outlet section defining the second outlet port (43).

8. The apparatus (1) according to claim 7, wherein the first curve (44) is connected to the first opening (44') adjustably relative to a rotation about an axis parallel to the advancing direction (DA) of the apparatus (1) and/or wherein the second curve (45) is connected to the second opening (45') adjustably relative to a rotation about an axis parallel to the advancing direction (DA) of the apparatus (1).

9. The apparatus (1) according to any one of the preceding claims, wherein the conveyor comprises a third outlet port (47), facing a direction perpendicular to the advancing direction (DA) in a sense opposite of the sense of the weight force, to receive additional dispensers located above the first and the second outlet ports (42, 43) along a direction parallel to the weight force.

10. The apparatus according to claim 9, comprising a first and a second dispensing fan (331, 332) extending from the third outlet port (47) and configured to dispense the treating air towards the sides of the apparatus (1).

11. The apparatus (1) according to claim 10, wherein the first and second dispensing fans (331, 332) include a respective position which is adjustable relative to a rotation about an axis parallel to the advancing direction (DA).

12. The apparatus (1) according to claim 10, wherein the position of the first and second dispensing fans (331, 332) is such as to allow dispensing the treating compound along a direction which is at least partly oriented towards the ground.

13. The apparatus (1) according to claim 10, 11 or 12, comprising an elevating duct, disposed between the third outlet port (47) and the first and second dispensing fans (331, 332) to allow dispensing the treating compound from the top down.

14. The apparatus (1) according to any one of the preceding claims, wherein the pressure head assembly (4) comprises a fan configured to rotate about an axis parallel to the advancing direction (DA).

15. A method for spraying crops with a treating compound, comprising the following steps:
- providing a spraying apparatus (1) advancing among the crops along an advancing direction;
- storing a treating compound in a tank (2);
- receiving treating air, including the treating compound in nebulized form, in a dispensing assembly (3);
- taking air in from an outside atmosphere and mixing it with the treating compound;
- pumping the treating air into the dispensing assembly (3) by means of a pressure head assembly (4);
- electrostatically charging the treating compound in nebulized form before dispensing it,
wherein in the step of pumping the treating air into the dispensing assembly (3), the treating air flows through a conveyor including:
- an inlet port (41), connected to the pressure head assembly (4) to receive treating air;
- a first outlet port and a second outlet port (42, 43), connected to the dispensing assembly (3) to convey therein the treating air received from the pressure head assembly (4) along a direction perpendicular to the advancing direction of the apparatus (1).
